# DEMANDE DE BREVET EUROPEEN

(11) **EP 3 933 112 A1**
(43) Date de publication de la demande: **05.01.2022**
(21) Numéro de dépôt: 20184067.5
(22) Date de dépôt: 03.07.2020
(51) Int. Cl.: E02B 3/04, E02B 3/06

(54) **DISPOSITIF DE PROTECTION D'UNE COTE CONTRE LES EFFETS DE LA HOULE**

(71) Demandeur: Acri In, 06410 Biot (FR)
(72) Inventeur: BARDEY, Philippe, 06250 MOUGINS (FR)
(74) Mandataire: Macquet, Christophe

(57) **Abrégé**

La présente invention a pour objet un dispositif de protection d'une côte contre les effets de la houle, ledit dispositif comprenant une première digue dite coté côte, partiellement ou totalement immergée, ladite première digue étant disposée sensiblement parallèle à la côte, la première digue et la côte définissant un premier bassin. Le dispositif selon l'invention comporte en outre une seconde digue dite coté large, partiellement ou totalement immergée, ladite seconde digue étant disposée sensiblement parallèle à la première digue, la première et la seconde digue définissant un second bassin dit de dissipation de la houle, la seconde digue étant munie de canaux d'évacuation pour la vidange de l'eau contenue dans ledit bassin de dissipation vers le large. L'invention s'applique par exemple à la protection des côtes.

## Description

### Domaine technique de l'invention

La présente invention concerne un dispositif de protection d'une côte contre les effets de la houle. Le dispositif selon l'invention est du type comprenant une première digue dite coté côte, cette digue étant partiellement ou totalement immergée, et étant disposée sensiblement parallèle à la côte, ladite digue et la côte elle-même définissant un premier bassin.

### Art antérieur

On connait des dispositifs de digues divers et variés, dans lesquels les digues sont immergées ou partiellement immergées et disposées sensiblement parallèlement à la côte en vue de protéger cette côte contre l'érosion dues à la houle ou de protéger des sites particuliers de cette côte, par exemple comprenant des ouvrages maritimes, des installations côtières ou offshore, ou encore des ports, de l'énergie des vagues incidentes venant se briser contre ces sites.

Les digues de ces dispositifs sont formées par exemple de blocs artificiels ou d'enrochements ou de tous types de matériaux constituant une barrière dite brise-lames. Grâce à de tels dispositifs de digues, la houle venant du large est cassée et la côte est protégée.

Toutefois, de tels dispositifs sont à l'origine d'une surélévation excessive du plan d'eau du premier bassin. Cette surélévation est nuisible. Elle génère des courants dans ce bassin, des submersions marines et l'entrainement de matériaux fins tels que le sable aux extrémités des ouvrages constitutifs des digues.

### Résumé de l'invention

Compte tenu de ce qui précède, un problème technique que se propose de résoudre l'invention est de réaliser un nouveau dispositif de protection d'une côte contre les effets de la houle.

La solution de l'invention à ce problème a pour objet un dispositif de protection d'une côte contre les effets de la houle, ledit dispositif comprenant une première digue dite coté côte, partiellement ou totalement immergée, ladite première digue étant disposée sensiblement parallèle à la côte, la première digue et la côte définissant un premier bassin, caractérisé en ce que ledit dispositif comporte en outre une seconde digue dite coté large, partiellement ou totalement immergée, ladite seconde digue étant disposée sensiblement parallèle à la première digue, la première et la seconde digues définissant un second bassin dit de dissipation de la houle, la seconde digue étant munie de canaux d'évacuation pour la vidange de l'eau contenue dans ledit bassin de dissipation vers le large, et selon lequel la distance moyenne entre la première digue et la seconde digue est comprise entre 0,25 et 1 fois la longueur d'onde moyenne λ des houles incidentes sur le dispositif et selon lequel la distance moyenne séparant deux canaux d'évacuation est comprise entre 1/3 et 2/3 de cette longueur d'onde λ.

Avantageusement, - l'une au moins des première et seconde digues est totalement immergée, le bord supérieur de ladite au moins une digue immergée étant situé à une profondeur inférieure ou égale à 2 m ; - la seconde digue est une digue interrompue formée d'une pluralité d'éléments de digue disjoints, les canaux d'évacuation étant formés par l'espace entre lesdits éléments de digue ; - la distance moyenne entre deux éléments de digue est égale à D, définissant la porosité de la digue, cette porosité étant comprise entre 10 et 50%. ; - la première digue comprend des canaux d'évacuation de l'eau contenue dans le premier bassin défini par la première digue et la côte ; - la première digue est une digue interrompue formée d'une pluralité d'éléments de digue disjoints, les canaux d'évacuation étant formés par l'espace entre lesdits éléments de digue ; - la première digue comprend des canaux d'évacuation, les première et seconde digues sont des digues interrompues formées d'une pluralité d'éléments de digue disjoints, les canaux d'évacuation étant formés par l'espace entre lesdits éléments de digue, les canaux d'évacuation de la première digue étant disposés décalés par rapport aux canaux d'évacuation de la seconde digue ; et - les canaux d'évacuation sont formés par la perméabilité du milieu constitutif des digues ou des conduites immergées dans lesdites digues ; - les canaux d'évacuation sont munis de dispositifs destinés à récupérer l'énergie hydraulique contenue dans les courants traversant lesdits canaux.

### Brève description des figures

L'invention sera mieux comprise à la lecture de la description non limitative qui suit, rédigée au regard des dessins annexés, dans lesquels :
- la figure 1 représente, de manière schématique, le dispositif selon l'invention ;
- la figure 2A illustre, en coupe, et de manière schématique, un mode de réalisation du dispositif selon l'invention dans une configuration en exemple numérotée 1.1 ;
- la figure 2B illustre, en coupe, et de manière schématique, un dispositif selon l'art antérieur dans une configuration en exemple numérotée 1.2 ;
- la figure 2C illustre, en coupe, et de manière schématique, un dispositif selon l'art antérieur dans une configuration en exemple numérotée 1.3 ;
- la figure 2D illustre, en coupe, et de manière schématique, l'état du site en exemple correspondant à une configuration en exemple numérotée 1.4 ;
- la figure 3 est montre les variations de la vitesse du courant ainsi que son orientation dans un canal de la digue coté large d'un dispositif selon l'invention ;
- la figure 4 compare, pour différentes configurations, le niveau d'eau moyen derrière des ouvrages selon l'art antérieur et selon l'invention ;
- la figure 5 compare, pour différentes configuration, l'énergie de la houle derrière les différents ouvrages de protection simulés dont un ouvrage correspondant au dispositif selon l'invention ;
- la figure 6A illustre un modèle d'un dispositif selon l'invention, et mentionne certaines caractéristiques géométriques de ce dispositif ; et
- les figures 6B, 6C et 6D montrent des résultats de simulations obtenus pour des dispositifs selon l'invention dans différentes conditions de houles, en vue de déterminer des valeurs d'intérêts pour certaines caractéristiques géométriques de ces dispositifs.

### Description détaillée de l'invention

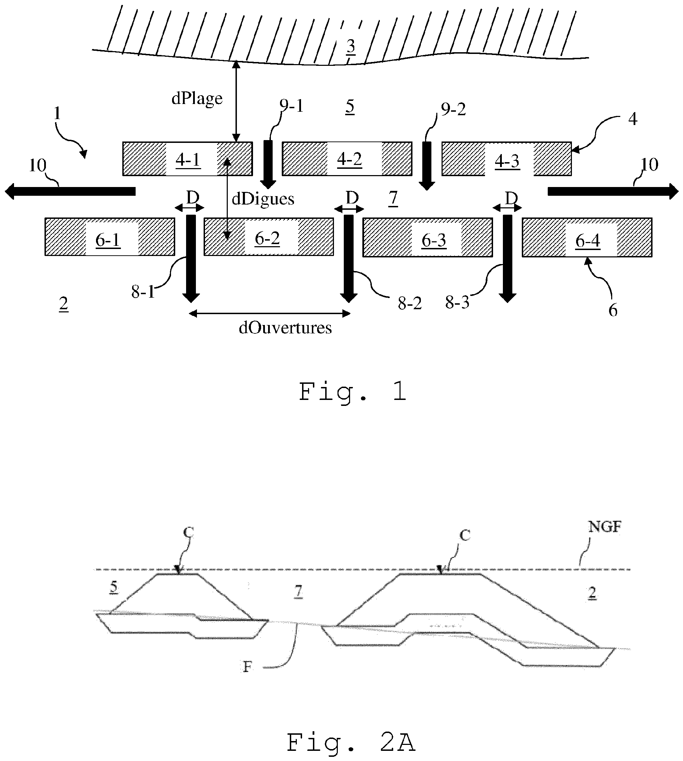

L'invention concerne un dispositif de protection d'une côte contre les effets de la houle. Ce dispositif est référencé 1 en figure 1.

Le dispositif 1 selon l'invention est construit dans une étendue d'eau 2, à proximité d'une côte 3. L'étendue d'eau est par exemple une étendue d'eau marine ou une étendue d'eau douce. La côte 3 est par exemple un bord de mer formé de sable. Il peut toutefois s'agir d'une côte quelconque, formée de gravillons ou de roches. La côte est aménagée ou non. Lorsque la côte est aménagée, il peut s'agir d'un port. La côte peut comporter des bâtiments ou autres constructions.

Le dispositif selon l'invention comprend une première digue 4. Cette première digue 4 est dite coté côte, car elle est disposée du côté de la côte 3. Elle est généralement sensiblement rectiligne, orientée sensiblement parallèlement au bord de la côte.

Dans un exemple de réalisation, la première digue 4 est située à une distance moyenne dPlage de l'ordre de 200 m du bord de la côte. De manière générale, la première digue 4 est située à une distance moyenne dPlage supérieure ou égale à 1/2 de la longueur d'onde moyenne λ des houles incidentes sur le dispositif 1 selon l'invention, qui se forment coté large, avantageusement comprise entre 1/2 et 3/2 de cette longueur d'onde. En pratique, et ainsi que cela a été montré dans l'exemple décrit ci-après, dPlage peut être relativement importante, supérieure à 100 m. Toutefois, dans la plupart des cas pratiques, les coûts de réalisation d'un dispositif selon l'invention croissent en fonction de l'éloignement de la côte. On cherchera donc à voir une distance dPlage relativement faible, tout en autorisant une bonne efficacité de l'ouvrage.

La première digue 4 et la côte 3 définissent un premier bassin de rétention d'eau 5, intermédiaire entre ladite digue 4 et ladite côte 3.

Le dispositif selon l'invention comporte en outre une deuxième digue 6. La seconde digue 6 est, de même que la première digue 4, sensiblement rectiligne, disposée sensiblement parallèle à cette première digue 4. Cette deuxième digue 6 est dite coté large, car elle est disposée du côté du large de l'étendue d'eau 2.

La deuxième digue 6 est située à une distance moyenne dDigues de la première digue 4, cette distance étant prise crête à crête, à savoir de la crête de la première digue à la crête de la deuxième digue. Dans un exemple de réalisation, dDigues est comprise entre 0,25 et 1 fois la longueur d'onde moyenne λ des houles incidentes appliquées au dispositif selon l'invention, venant du large. Dans un exemple, cette longueur d'onde est comprise entre 50 et 100 m, mais elle varie bien entendu en fonction des lieux sur lesquels les dispositifs selon l'invention peuvent être mis en place. De manière générale, la seconde digue est située à une distance moyenne dDigues comprise entre 15 et 45 m de la première digue 4. Par exemple, dDigues est de l'ordre de 30 m.

Selon l'invention, la première 4 et la seconde 6 digues définissent un second bassin 7. Ce second bassin 7 est un bassin dit de dissipation de la houle. Ce bassin de dissipation de largeur est limité par les deux massifs de formes et matériaux adaptés immergés ou émergeants par temps calme formant les digues 4 et 6.

Les digues 4 et 6 sont partiellement ou totalement immergées. Si une digue 4 ou 6 est totalement immergée, en l'absence de houle, sa crête n'est pas visible car elle est située au-dessous du niveau de l'eau. Dans ce cas, la crête de la digue 4 ou 6 est par exemple située à une profondeur inférieure ou égale à 2 m.

La digue côté large 6 est munie de canaux d'évacuation de l'eau contenue dans le bassin 7 de dissipation de la houle. Dans un mode de réalisation de l'invention, la seconde digue 6 est interrompue. Elle se compose alors d'une pluralité d'éléments de digue disjoints, par exemple 4 éléments 6-1, 6-2, 6-3 et 6-4, séparés par les canaux d'évacuation 8-1, 8-2, 8-3. La distance moyenne séparant deux canaux d'évacuation est notée dOuvertures à la figure 1. dOuvertures est comprise entre 25 m et 40 m, soit, entre 1/3 et 2/3 de la longueur d'onde moyenne λ des houles incidentes sur le dispositif selon l'invention, venant du large. Selon l'invention, la distance D moyenne entre deux éléments de la seconde digue 6 est comprise entre 1/4 et 1/2 de dOUvertures. En définitive, cette distance D définit la porosité de la seconde digue à l'eau. D est réglé pour correspondre à une porosité comprise entre 10 et 50%. Dans un exemple de réalisation, les éléments de digue sont distants d'une distance qui est de l'ordre de 10 m. Cette distance est généralement comprise entre 5 et 20 m. Les canaux d'évacuation de l'eau contenue dans le bassin 7 sont alors les canaux formés par les interruptions de la digue 6, c'est-à-dire l'espace entre lesdits éléments de digue. Ainsi, lorsque la digue 6 comporte 4 éléments de digue, le canal 8-1 est le canal situé entre les éléments 6-1 et 6-2 de la digue 6, le canal 8-2 est le canal situé entre les éléments 6-2 et 6-3 de la digue 6, et ainsi de suite.

La digue coté côte 4 est elle-même avantageusement munie de canaux d'évacuation de l'eau contenue dans le bassin 5. Dans un mode de réalisation de l'invention, la première digue 4 est interrompue. Elle se compose alors d'une pluralité d'éléments de digue disjoints, par exemple 3 éléments 4-1, 4-2 et 4-3. Dans un exemple de réalisation, les éléments de digue sont distants d'une distance qui est de l'ordre de 10 m. Cette distance est généralement comprise entre 5 et 20 m. Les canaux d'évacuation de l'eau contenue dans le bassin 5 sont alors les canaux formés par les interruptions de la digue 4, c'est-à-dire l'espace entre lesdits éléments de digue. Ainsi, lorsque la digue 4 comporte 3 éléments de digue, le canal 9-1 est le canal situé entre les éléments 4-1 et 4-2 de la digue 4 et le canal 9-2 est le canal situé entre les éléments 4-2 et 6-3 de la digue 4. Les caractéristiques précitées dOuvertures et D décrites pour la seconde digue 6 s'appliquent de même à la première digue 4.

Les canaux d'évacuation sont principalement dirigés vers le large pour évacuer des débits de franchissement et participer à la dissipation hydraulique de l'énergie par l'élargissement brusque de l'écoulement ainsi constitué.

La vidange du bassin 7 est obtenue au travers d'un milieu perméable du massif (granulométrie des enrochements, blocs artificiels ou tous types de matériaux assurant aussi la stabilité des massifs), par des conduites immergées ou via des canaux d'évacuation à surface libre avec un espacement approprié. Ainsi, bien que les canaux d'évacuation 9-1, 9-2, 8-1, 8-2, 8-3 soient généralement formés par des interruptions dans une digue 4 ou 6, ils peuvent être formés par des conduites immergées disposées à l'intérieur d'une digue 4 ou 6. La digue n'est alors pas interrompue mais dispose de canaux pour l'évacuation de l'eau intégrés lors de sa constitution. Dans d'autres modes de réalisation, les canaux d'évacuation sont formés par la perméabilité du milieu constitutif des digues.

Les canaux 9-1 et 9-2 évacuent l'eau de manière générale du bassin 5 vers le bassin 7. Les canaux 8-1, 8-2 et 8-3 évacuent l'eau de manière générale du bassin 7 vers le large, et permettent de ce fait la vidange de l'eau contenu dans ledit bassin 7 vers le large.

Lorsque la digue 4 coté côte est munie de canaux d'évacuation 9-1, 9-2, ces canaux sont avantageusement disposés décalés par rapport aux canaux d'évacuation de la digue 6 coté large à la manière montrée à la figure 1. Il n'y a donc pas de communication directe entre les canaux de la digue 4 et ceux de la digue 6. De ce fait, on évite une transmission directe de l'énergie de la houle.

Selon l'invention, l'énergie de la houle incidente franchissant les ouvrages de protection est convertie en énergie potentielle qui se traduit par une surélévation du niveau d'eau. Selon l'invention, cette énergie potentielle est convertie en énergie hydraulique dont l'utilisation est parfaitement maîtrisée dans de nombreux procédés. Une configuration du dispositif optimisée pour cet objectif permet la récupération d'une part importante de l'énergie de la houle incidente.

Des études du dispositif en canal à houle et modélisations numériques confirment d'ailleurs que l'écoulement dans les dispositifs de vidange est très majoritairement orienté de la terre vers le large. Cette configuration est favorable à l'installation d'un dispositif de récupération de cette énergie hydraulique. Particulièrement, les conduites immergées qui sont protégées du déferlement sont de bonnes candidates pour de telles installations. Ainsi, selon une variante de réalisation avantageuse de l'invention, le dispositif selon l'invention est équipé d'hydroliennes ou de tous autres dispositifs permettant de récupérer l'énergie hydraulique contenue dans les courants d'eau traversant les canaux. De telles hydroliennes comporteront par exemple une turbine qui assure la transformation de l'énergie cinétique de l'eau en mouvement dans les canaux en énergie mécanique qui est ensuite convertie en énergie électrique au moyen d'un alternateur.

Les trains de houle, provenant du large, viennent buter sur la digue coté large 6. L'eau remplit alors le bassin 7 de dissipation de la houle puis le bassin 5. La houle est stoppée par l'ensemble des deux digues 4 et 6. Le niveau de l'eau contenue dans le bassin 5 ne monte pas sensiblement, ni dans le bassin 7. En effet, l'eau contenue dans le bassin 5 est évacuée par les canaux 9-1 et 9-2 et l'eau contenue dans le bassin 7 est évacuée vers le large par les canaux 8-1, 8-2 et 8-3. La particularité du dispositif selon l'invention est donc de favoriser la vidange du bassin de dissipation à chaque vague y pénétrant pour éviter une surélévation excessive du plan d'eau nuisible par rapport aux problèmes de franchissement, de submersion marine et d'entrainement de matériaux fins (sable) aux extrémités des ouvrages. L'évacuation de l'eau est donc en outre assurée par les côtés les bords latéraux du bassin, ainsi que cela est figuré à la figure 1, par les flèches numérotées 10. La houle n'atteint pas ou pas sensiblement le bord de la côte 3. Le niveau d'eau dans le bassin 5 n'augmente pas sensiblement. La côte est ainsi protégée des effets de la houle.

### EXEMPLE 1 : LITTORAL DE LA VILLE DE CANNES

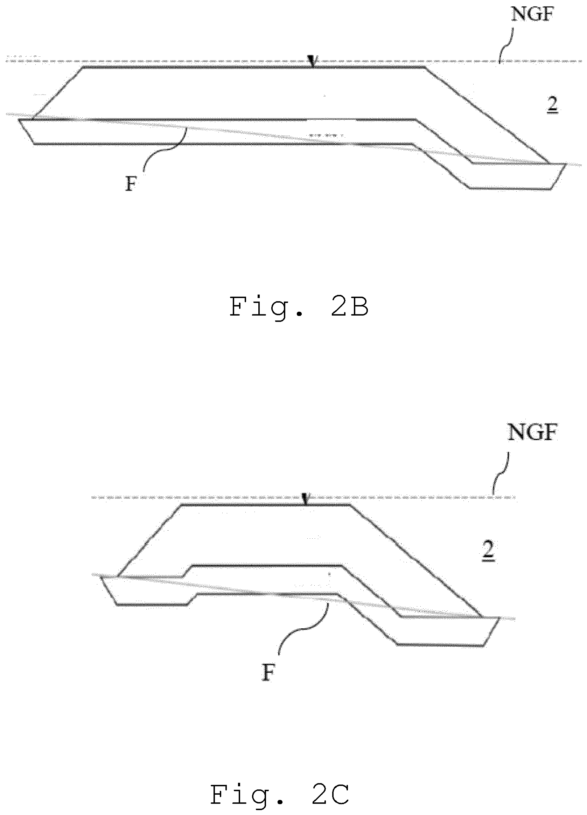

Dans le cadre du projet de réalisation d'une protection sur le littoral de la ville de Cannes, France, des essais sur modèle physique au 1/36^{ième} ont été conduits afin de définir les dispositifs de digues à mettre en œuvre pour obtenir une protection optimale, en respectant la similitude de Froude, qui permet de représenter correctement la propagation de la houle et ses champs de pressions et de vitesses. Ces essais ont été réalisés dans les locaux de la Société ACRI-IN, à Sophia-Antipolis, France, au sein du laboratoire d'hydrodynamique doté d'un canal à houle d'une longueur de 31 m, d'une largeur de 1,80 m et d'une hauteur de 2 m, pourvu d'un générateur de houle pouvant générer des vagues de hauteur comprise entre 0,01 m et 1 m selon une période comprise entre 0,5 s et 3,0 s. Les configurations suivantes ont été testées face aux conditions naturelles du site (houles annuelle, décennale et cinquantennale associées aux niveaux d'eau de même période de retour) ainsi que face à des houles régulières :
- Configuration 1.1 (fig. 2A) : dispositif selon l'invention à double digue immergée avec ouvertures, arasée à -0,35 m NGF (niveau de nivellement) la première digue possédant une crête C de 4 m de largeur et la seconde digue, coté large, possédant une crête C de 8 m de largeur, les crêtes étant distantes de 20 m, et étant bâties sur un fond marin F.
- Configuration 1.2 (Fig. 2B) : dispositif à digue unique immergée avec une crête C de 32 m de largeur, arasée à -0,35 m NGF.
- Configuration 1.3 (Fig. 2C) : dispositif à digue unique immergée avec une crête C de 15 m de largeur, arasée à -0,35 m NGF.
- Configuration 1.4 (Fig. 2D) : état actuel du site, à savoir sans digue.

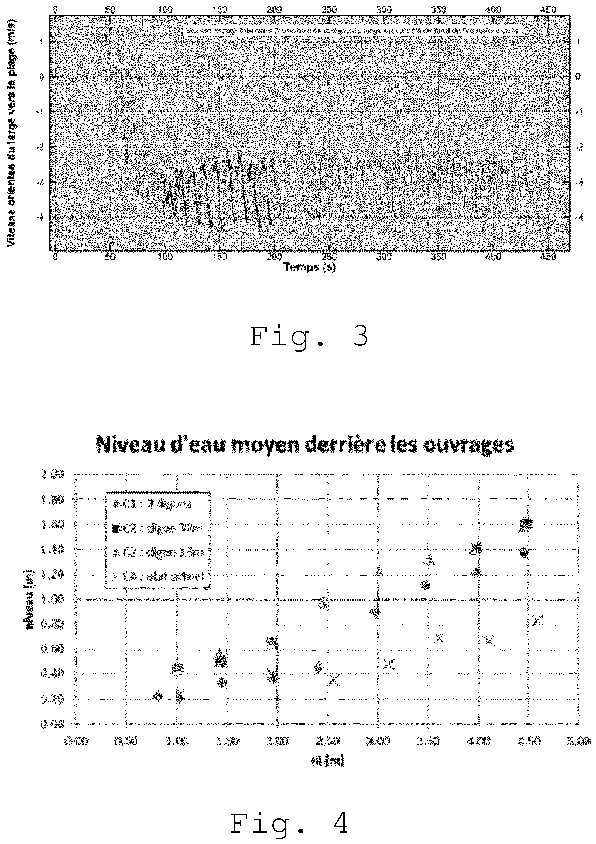

Ainsi que cela est montré à la figure 3, on a simulé la vitesse de l'eau dans les ouvertures formant canaux de la digue coté large. Il apparaît que les courants qui sont générés à ce niveau sont importants et dirigés vers le large. Ils sont suffisants pour envisager une récupération de l'énergie hydraulique contenue dans ces courants, par des moyens connus de l'art antérieur.

Ainsi que cela apparaît à la figure 4, pour toutes les conditions de houle et de niveau d'eau testées, la configuration 1.1 est celle qui induit un niveau d'eau moyen le plus faible dans le premier bassin, à l'arrière du dispositif. La stabilité de la côte qui, dans le cas du site considéré, est une côte de sable, sera ainsi grandement augmentée, par la mise en œuvre d'un dispositif selon la configuration 1.1, en comparaison avec des dispositifs selon les configurations 1.2 ou 1.3.

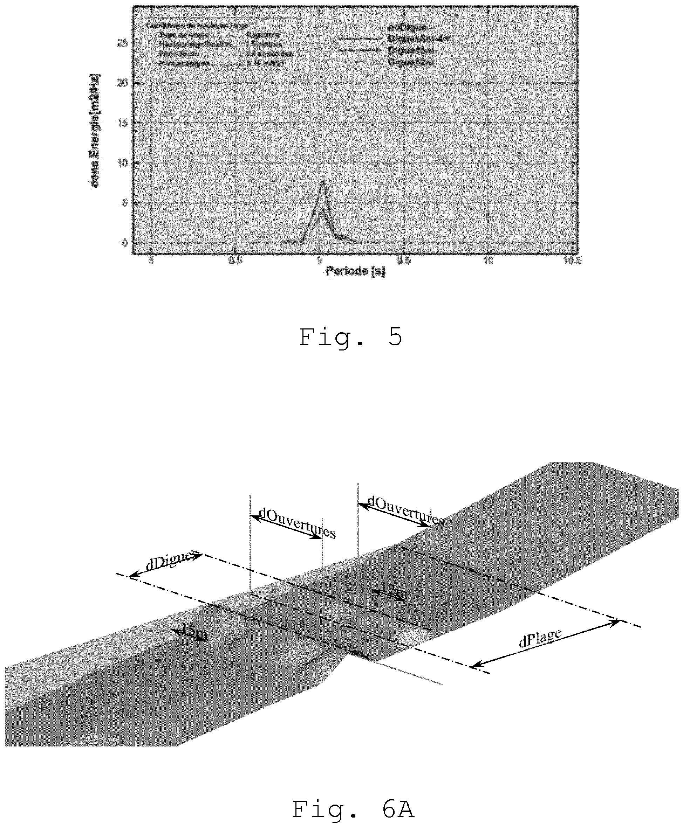

Par ailleurs, à partir des mesures obtenues lors de essais en houle régulière, une analyse des signaux de pression a été effectuée afin d'obtenir les spectres d'énergie de la houle mesurée par les capteurs. Ainsi que cela est montré à la figure 5, tous les ouvrages ont un impact positif sur l'énergie de la houle atteignant la plage. La digue continue de 15 mètres de large en crête reste néanmoins le moins efficace des ouvrages. La digue continue de 32 mètres en crête est une barrière certes très efficace vis-à-vis l'énergie résiduelle à la côte mais dont le coût de réalisation justifie d'utiliser le dispositif selon l'invention, qui dont les résultats, en termes de protection de la plage, sont intermédiaires entre ceux obtenus pour la digue de 15 m et celle de 32 m, voire voisine à celle de 32 m, pour des houles à forte densité spectrale.

Des modélisations numériques ont en outre été réalisées au moyen du logiciel Xbeach^{™} qui est un logiciel bidimensionnel qui permet de modéliser la propagation de la houle, des ondes infra-gravitaires et les courants. Les six configurations géométriques suivantes ont été modélisées :
- Configuration 2.1 : état actuel du site, sans digue.
- Configuration 2.2 : un dispositif possédant une digue unique et continue avec une largeur de crête de 32 m ;
- Configuration 2.3 : un dispositif possédant une digue unique et continue avec une largeur de crête de 15 m ;
- Configuration 2.4 : un dispositif selon l'invention dont la digue coté large est discontinue et possède une crête de 8 m et la digue coté côte est discontinue et possède une crète de 4 m.
- Configuration 2.5 : un dispositif selon l'invention dont la digue coté large est discontinue et possède une crête de 4 m et la digue coté côte est discontinue et possède de même une crête de 4 m.
- Configuration 2.6 : un dispositif en simple digue discontinue qui possède une crête de 8 m.

Contrairement aux modélisations physiques, les configurations en canal numériques sont réalisées à l'échelle 1:1. Le canal numérique utilisé à une longueur de 582 mètres avec une largeur de 250 mètres. La bathymétrie du fond est conforme à celle utilisée pour les modélisations physiques.

Le logiciel XBeach^{™} reproduit l'évolution au cours de la tempête modélisée de la surface du plan d'eau et des vitesses moyennes sur la colonne d'eau. En sortie, il est possible de connaître en tous points du canal numérique l'évolution de ces paramètres. La capture d'un instant donné permet de représenter l'état de mer et au besoin de réaliser des animations permettant la compréhension des phénomènes.

Pour synthétiser les résultats il est plus intéressant de se focaliser sur l'état de la mer entre l'ouvrage et la plage pour en extraire des informations permettant de juger de l'efficacité des ouvrages envisagés. Ainsi, pour hiérarchiser les solutions envisagées, on positionne un capteur fictif à une trentaine de mètres du mur de haut de plage où l'on effectue un enregistrement de l'évolution de la position de la surface libre. Ce paramètre est traité par une transformation de Fourier pour en extraire la densité spectrale d'énergie.

Il apparaît que tous les ouvrages ont un impact positif sur l'énergie de la houle atteignant la plage. La digue discontinue de 8 mètres de large en crête reste néanmoins le moins efficace des ouvrages. La digue continue de 32 mètres en crête est une barrière certes très efficace vis-à-vis l'énergie résiduelle à la côte mais dont le coût de réalisation justifie d'explorer des solutions intermédiaires. La digue continue de 15 mètres en propose une efficacité intéressante. Les solutions selon l'invention en doubles digues discontinues sont quant à elles efficaces en particulier pour les houles à forte densité spectrale d'énergie. Leur efficacité est démontrée aussi pour les houles à faible densité d'énergie.

L'analyse spectrale permet de synthétiser les variations rapides de niveau d'eau à la fréquence de la houle. Il convient aussi de s'intéresser à la variation du niveau marin moyen à proximité de la plage. Dans cet objectif, des moyennes ont été réalisées sur des séries temporelles de niveau d'eau.

L'observation des résultats montre clairement que la mise en place d'un ouvrage, quel qu'il soit, provoque un rehaussement du niveau moyen. Toutefois, ce phénomène est fortement marqué pour les ouvrages continus et ceci d'autant plus qu'ils sont imposants. Les ouvrages discontinus ont un impact bien moins marqué sur le niveau d'eau moyen. Les deux ouvrages à deux digues sont équivalents sur ce plan-là. La digue seule de 8 m discontinue impacte le moins impactant le niveau moyen. Cette hiérarchie est d'autant plus marquée avec l'accroissance de la période de la houle et de sa hauteur significative.

Enfin, pour les ouvrages selon l'invention en double digue, une étude additionnelle de sensibilité par un balayage en fin de période permet de constater qu'il n'y a pas d'effet de résonnance à une période particulière.

### EXEMPLE 2 : ETUDES GEOMETRIQUES DU DISPOSITIF DE PROTECTION SELON L'INVENTION

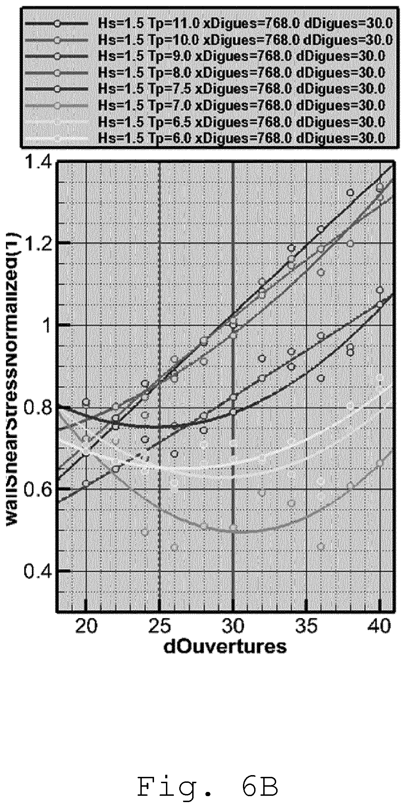

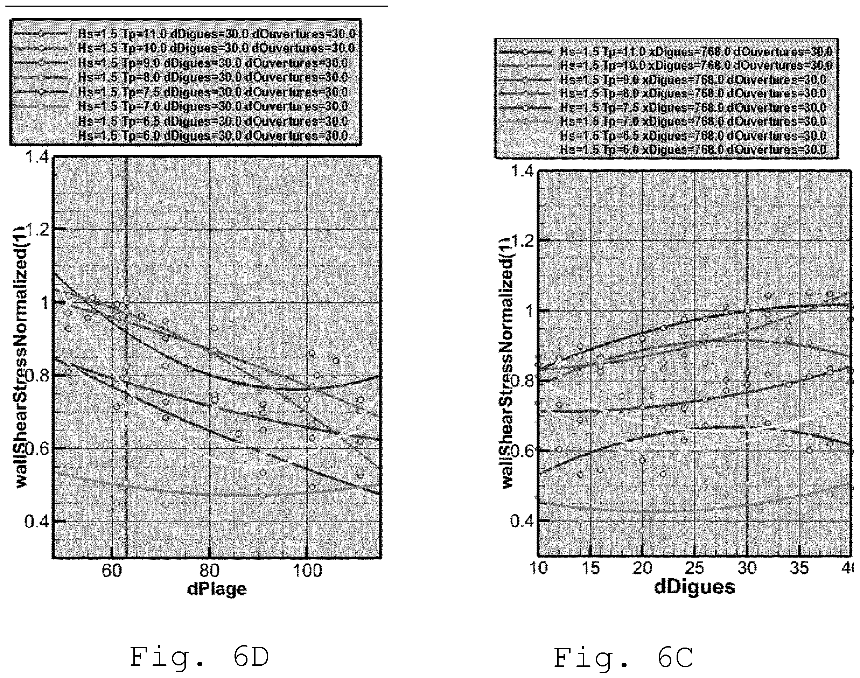

Un dispositif selon l'invention a été modélisé numériquement, et physiquement. Différentes hypothèses ont été formées pour les modèles. En particulier, il a été considéré que le profil de la plage est constant le long de la côte, que les digues constitutives du dispositif selon l'invention sont parallèles entre elles et à la côte, et les distances D séparant les blocs des premières et secondes digues ont été choisies comme étant égales à 12 et 15 m, respectivement. Les simulations ont eu pour objet de définir certaines caractéristiques géométriques du dispositif selon l'invention et, notamment, de définir les valeurs de dOuvertures, dDigues et de dPlage montrées à la Fig. 6A. Aux Figs. 6B, 6C et 6D, des valeurs simulées des forces de cisaillement, qui s'appliquent dans le fond du bassin de rétention 5, ont été obtenues, par simulation. Ces valeurs sont normalisées, obtenues par comparaison avec des valeurs de ces forces en l'absence de dispositif selon l'invention. Les valeurs des forces de cisaillement appliquées au fond du bassin de rétention 5 sont caractéristiques de l'efficacité du dispositif. C'est la raison pour laquelle ces forces ont été choisies pour la simulation.

Ainsi que cela est montré à la Fig. 6B, les valeurs normalisées des forces de cisaillement ont été simulées pour des hauteurs de houle Hs (hauteur creux/crête) de 1,5 m, différentes périodes en seconde de la houle Tp, des valeurs xDigues représentatives de la position transversale des axes longitudinaux des digues égales à 768 m, des valeurs de dDigues égales à 30 m, et ce, pour différentes valeurs de dOuvertures. Il apparaît que, si dOuvertures est de l'ordre de 25-30 m, alors les forces de cisaillement, dans les différentes conditions de houles (Tp variable), sont minimisées. Ce n'est plus le cas pour des valeurs de dOuvertures supérieures à 35 voire 40 m.

Ainsi que cela est montré à la Fig. 6C, les valeurs normalisées des forces de cisaillement ont été simulées pour des hauteurs de houle Hs de 1,5 m, différentes périodes en seconde de la houle Tp, des valeurs xDigues représentatives de la position transversale des axes longitudinaux des digues égales à 768 m, des valeurs de dOuvertures égales à 30 m, et ce, pour différentes valeurs de dDigues. Il apparaît que, si dDigues est de l'ordre de 25-30 m, alors les forces de cisaillement, dans les différentes conditions de houles (Tp variable), sont minimisées. Ce n'est plus le cas pour des valeurs de dDigues supérieures à 40 m.

Ainsi que cela est montré à la Fig. 6D, les valeurs normalisées des forces de cisaillement ont été simulées pour des hauteurs de houle Hs de 1,5 m, différentes périodes en seconde de la houle Tp, des valeurs xDigues représentatives de la position transversale des axes longitudinaux des digues égales à 768 m, des valeurs de dOuvertures égales à 30 m, et ce, pour différentes valeurs de dPlage. Il apparaît que les forces de cisaillement sont plus faibles lorsque dPlage augmente. Toutefois, les coûts de réalisation d'un dispositif selon l'invention augmentent généralement en fonction de l'éloignement du bord. De ce fait, cette distance devra être raisonnable, compte tenu des coûts.

Différentes simulations ont été finalement effectuées dans le cadre de l'exemple précédent, ou selon d'autres exemples, qui permettent de déduire que :
- dDigues doit avantageusement être compris entre 0,25 et 1 fois la longueur d'onde moyenne λ des houles incidentes régulières sur le dispositif selon l'invention ;
- dOuvertures doit avantageusement être compris entre 1/3 et 2/3 de la longueur d'onde moyenne λ des houles incidentes régulières sur le dispositif selon l'invention ;
- D doit avantageusement être réglé pour correspondre à une porosité comprise entre 10 et 50%.
- dPlage devrait avantageusement être supérieur à ½ de la longueur d'onde | de la houle qui se forme coté large.

## Revendications

1. Dispositif (1) de protection d'une côte contre les effets de la houle, ledit dispositif comprenant une première digue (4) dite coté côte, partiellement ou totalement immergée, ladite première digue étant disposée sensiblement parallèle à la côte (3), la première digue et la côte définissant un premier bassin (5), **caractérisé en ce que** ledit dispositif comporte en outre une seconde digue (6) dite coté large, partiellement ou totalement immergée, ladite seconde digue étant disposée sensiblement parallèle à la première digue, la première et la seconde digues définissant un second bassin (7) dit de dissipation de la houle, la seconde digue (6) étant munie de canaux d'évacuation (8-1, 8-2, 8-3) pour la vidange de l'eau contenue dans ledit bassin de dissipation vers le large et selon lequel la distance moyenne (dDigues) entre la première digue (4) et seconde digue (6) est comprise entre 0,25 et 1 fois la longueur d'onde moyenne λ des houles incidentes sur le dispositif et selon lequel la distance moyenne (dOuvertures) séparant deux canaux d'évacuation est comprise entre 1/3 et 2/3 de cette longueur d'onde À.

2. Dispositif selon la revendication 1, **caractérisé en ce que** l'une au moins des première (4) et seconde (6) digues est totalement immergée, le bord supérieur de ladite digue immergée étant situé à une profondeur inférieure ou égale à 2 m.

3. Dispositif selon l'une des revendications 1 ou 2, **caractérisé en ce que** la seconde digue (6) est une digue interrompue formée d'une pluralité d'éléments de digue disjoints (6-1, 6-2, 6-3, 6-4)), les canaux d'évacuation (8-1, 8-2, 8-3) étant formés par l'espace entre lesdits éléments de digue.

4. Dispositif selon la revendication 3, **caractérisé en ce que** la distance moyenne entre deux éléments de digue (6-1, 6-2, 6-3, 6-4) est égale à D, et **en ce que** D est compris entre 1/4 et 1/2 de la distance moyenne (dOuvertures) séparant deux canaux d'évacuation.

5. Dispositif selon l'une des revendications précédentes, **caractérisé en ce que** la distance moyenne (dPlage) entre la côte et la première digue (4) est supérieure ou égale à 1/2 de la longueur d'onde moyenne λ des houles incidentes sur le dispositif.

6. Dispositif selon l'une des revendications précédentes, **caractérisé en ce que** la première digue (4) comprend des canaux d'évacuation (9-1, 9-2) de l'eau contenue dans le premier bassin (5) défini par la première digue et la côte (3).

7. Dispositif selon la revendication 6, **caractérisé en ce que** la première digue (4) est une digue interrompue formée d'une pluralité d'éléments de digue (4-1, 4-2, 4-3) disjoints, les canaux d'évacuation (9-1, 9-2) étant formés par l'espace entre lesdits éléments de digue.

8. Dispositif selon l'une des revendications précédentes, **caractérisée en ce que** la première digue (4) comprend des canaux d'évacuation (9-1, 9-2), les première (4) et seconde (6) digues sont des digues interrompues formées d'une pluralité d'éléments de digue disjoints (4-1, 4-2, 4-3, 6-1, 6-2, 6-3, 6-4), les canaux d'évacuation étant formés par l'espace entre lesdits éléments de digue, les canaux d'évacuation de la première digue étant disposés décalés par rapport aux canaux d'évacuation (8-1, 8-2, 8-3) de la seconde digue.

9. Dispositif selon l'une des revendications précédentes, **caractérisé en ce que** les canaux d'évacuation (9-1, 9-2, 8-1, 8-2, 8-3) sont formés par la perméabilité du milieu constitutif des digues (4, 6) ou des conduites immergées dans lesdites digues.

10. Dispositif selon l'une des revendications précédentes, **caractérisé en ce que** les canaux d'évacuation 9-1, 9-2, 8-1, 8-2, 8-3) sont munis de dispositifs destinés à récupérer l'énergie hydraulique contenue dans les courants traversant lesdits canaux.
